Europäisches Patentamt

(19) European Patent Office (11) Publication number: **0 036 239**

Office européen des brevets **B1**

(12) **EUROPEAN PATENT SPECIFICATION**

(45) Date of publication of patent specification: **26.09.84** (51) Int. Cl.³: **F 41 H 11/00, B 64 D 1/16**

(21) Application number: **81200296.2**

(22) Date of filing: **16.03.81**

(54) A device for spreading of radar chaff.

(30) Priority: **17.03.80 SE 8002058**
**26.09.80 SE 8006725**

(43) Date of publication of application:
**23.09.81 Bulletin 81/38**

(45) Publication of the grant of the patent:
**26.09.84 Bulletin 84/39**

(84) Designated Contracting States:
**DE FR GB IT NL SE**

(56) References cited:
**AT-A- 308 552**
**DE-B-1 007 635**
**US-A-2 954 948**
**US-A-3 185 035**
**US-A-3 308 719**
**US-A-3 430 533**
**US-A-3 519 221**
**US-A-3 766 829**
**US-A-3 987 966**

(73) Proprietor: **Svenska Philipsföretagen AB**
**Patent**
**S-11584 Stockholm (SE)**
㉞ **SE**

(73) Proprietor: **N.V. Philips' Gloeilampenfabrieken**
**Groenewoudseweg 1**
**NL-5621 BA Eindhoven (NL)**
㉞ **DE FR GB IT NL**

(72) Inventor: **Fehrm, Björn Olof**
**c/o INT. OCTROOIBUREAU B.V. Prof. Holstlaan 6**
**NL-5656 AA Eindhoven (NL)**

(74) Representative: **Melio, Jan Dirk et al**
**INTERNATIONAAL OCTROOIBUREAU B.V. Prof.**
**Holstlaan 6**
**NL-5656 AA Eindhoven (NL)**

(56) References cited:
**REVUE INTERNATIONALE DE DEFENSE, Série**
**Spéciale, Avions de Combat, 1976, GENEVA**
**(CH) "Equipements de guerre électronique**
**montés sur avions", pages 192-194**
**AVIATION WEEK & SPACE TECHNOLOGY,**
**February 21, 1972, McGraw Hill, NEW YORK**
**(US) "New F-4 Chaff Dispensing Method**
**Expected"**

Courier Press, Leamington Spa, England.

## Description

The invention is directed to a device for spreading of radar chaff from airplanes comprising a magazine for said chaff being preferably arranged as bundles, which may be displaced towards an ejection opening by means of a controllable displacement member, said chaff being ejected in the surrounding air stream and spreading being obtained by using air turbulence, the device comprising an aerodynamically shaped cover which may be applied on an airplane wing and accommodating said magazine and displacement members connected to a driving device for the chaff bundles.

In the following the designation chaff will be used throughout as a designation of the radar interference means which is used and should be considered to include the usual metal foil strips as well as corresponding means, e.g. metal covered glass fibers.

Devices of the type mentioned above are known and are used for spreading of the so called chaff clouds. A chaff cloud of this type may consist of a very large number of strips supplied by said bundles and forming dipoles of a predetermined length. Dependent on the length of said dipoles frequency bands which are used for radar reconnaissance, homing missiles and corresponding objects will be interfered.

Prior art devices for spreading of radar chaff belong to anyone of mainly three different forms of construction. In a first embodiment the spreading device is shaped as a capsular unit, which is applied as a free load at one of the so called beam or weapon positions of the airplane. In a second embodiment the spreading device is applied on the outer shell of the airplane and then normally on the outside of the airplane body. According to a third embodiment the spreading device is applied within the airplane body.

Said three main embodiments have different advantages and drawbacks. The two last mentioned embodiments have in common that a separate adaption of the very airplane body is required. For a spreading device which is mounted on the shell of the airplane holds specifically that the weight and dimensions thereof and thereby its chaff capacity will have to be limited in order to avoid extensive constructional reinforcements of the relevant parts of the airplane body. The device may furthermore give rise to a disturbed aerodynamic flow around the airplane body and problems may be encountered in order to obtain a good chaff spreading. The last mentioned drawback holds also for the third embodiment, the further main drawback of which is that a specific space within the airplane body is required. Normally no such spaces are available in a modern airplane but instead will have to be planned already during development of the airplane. Consequently, said two embodiments have in common that a specific adaption of the airplane is required.

The first mentioned embodiment, e.g. a capsular unit which may be applied on existent attachment means of the airplane, has the advantage that it allows for a good spreading of chaff and a large chaff capacity and that it may be applied on existent airplanes. Furthermore, modifications may be carried out in the capsular unit which will not notably influence the airplane. The drawbacks of a capsular unit are that it will occupy a position of the airplane which may otherwise be used for hanging of weapons and that the capsular unit will give a relatively high air resistance and a high surplus weight. A spreading device of this type is known from the SE patent application 7606167-0.

The object of invention is to provide a spreading device of the capsular unit type having said advantages but not the disadvantages of occupying an existent position for weapons or other equipment, and the surplus air, resistance and weight of which may be neglected.

The obect of invention is obtained by a device for spreading of radar chaff from airplanes comprising a magazine for said chaff, being preferably arranged as chaff bundles, which may be displaced towards an ejection opening by means of a controllable displacement member, in which said chaff is ejected into the surrounding air stream and spreading is obtained by using air turbulence, the device comprising an aerodynamically shaped cover which may be applied on an airplane wing and accommodating said magazine and displacement members connected to a driving device for the chaff bundles said coupling members being connectable to equipment in the airplane to receive power and control signals for each driving device, characterized in that said cover, is, in combination, provided on a first side, with first attachment means and coupling members, said attachment means and coupling members being adapted for cooperation with corresponding means and members at a position on the airplane, and, on a second side which is opposite to the first side, with further attachment means and contact members adapted for cooperation with corresponding means provided on a unit which may be additionally carried by the airplane and in that transfer means are provided between said coupling members and the driving device and said contact members, said cover being thereby useful for e.g. a mechanical and electrical adaption between the airplane and equipment or weapons carried by the same.

By the fact that the device according to the invention may be used as a carrier for other equipment the advantage is obtained that no so called carrier position on the airplane will have to be occupied for chaff spreading only. The carrier positions of airplanes of the type in question, that is so called attack, fighter and reconnaissance airplanes, are normally shaped in accordance with an accepted standard, from which follows that said attachment means and coupling members and attachment means and contact members, respectively, and the arrangement thereof are standardized. Units which may be carried by the airplane are provided with corresponding, standardized attachment means and coupling members. However, differences between standards exist, and this necessitates a mechanical and for example an electrical adaption between airplane and airborne unit carried thereby. If the attachment means and the members of the device according to the invention are shaped in accordance with a corresponding standard the same may be used for an adaption of this type, and thereby its usefulness will increase substantially and among other things make it possible for an airplane to carry a chaff spreading device during operations when arming with weapons and other equipment should otherwise be a hindrance with respect to the shortness of available space. Since the spreading device according to the invention does not occupy a carrier position on the airplane it is possible to use a number of two or more devices. The spreading devices may then be arrangd symmetrically on the airplane and thereby the asymmetry problems are eliminated, which are normally experienced when a prior art capsular unit with respect to the shortness of space is carried in one unsymmetrical position only on the airplane. By using several spreading devices the spreading is improved and thereby the available amount of chaff will be used more effectively. At the same time an improvement is obtained in respect of the possibility of generating within a short period of time a chaff cloud of a desirable extension and shape. This allows for a decrease of the total amount of chaff, with an unchanged ability of generating desirable chaff clouds. The total weight of two spreading devices having such a limited amount of chaff will not notably deviate from the weight of a prior art capsular unit having a corresponding chaff spreading capacity.

Normally the airplanes in question are armed with some kind of a hunting or fighter missile which may be of a homing type. For firing a missile of this type a rail or beam is used along which cooperating hanging means of the missile will slide when the missile is fired. In connection with the rail is furthermore provided a locking mechanism, being normally electrically operable and having the object to lock temporarily said missile to the rail and to unlock the same at the occasion of firing. Furthermore, a conductor joint is provided for connection to the missile. According to one preferred embodiment of the device according to the invention the further attachment means and contact members thereof comprise a rail having a locking mechanism and an electric conductor joint of the type mentioned, the device eliminating thereby the need of a separate adaption unit called rail launch or missile launch which is used today and having the only task to provide the necessary chemical and electrical adaption between missile and airplane. One commonly used missile is a hunting missile of IR homing type and comprising an IR element which must cooled in an activated state as long as the missile is still on the airplane.

One commonly used position of said hunting missile is at the very end of the airplane wing tips. Then the hunting missiles are suspended by means of a separate adaption unit. The cover of the spreading device may advantageously have an external shape which is substantially the same as that of an adaption unit of this type and be provided with corresponding attachment means and coupling members. One preferred use of the invention is the use of two spreading devices of this shape and as a carrier of a belonging hunting missile and being attached at the very end of a belonging airplane tip. In addition to the advantages mentioned above is thereby obtained an optimal position for chaff spreading as a consequence of the strongly turbulent air streams appearing at the wing tips and by the fact the spreading devices will be arranged with a mutual distance which is maximum and which will facilitate forming of the chaff cloud. In turn this allows for a further decrease of the amount of chaff and thereby a decreased weight with the chaff spreading capacity unchanged.

The torsional stiffness of airplane wings is limited and normally the same may not be exposed to torsional forces of any importance caused by hanging loads. When using a spreading device at the wing tip this loading may give rise to problems if a larger amount of chaff is desireable. This is based on the fact that the point of gravity will be displaced when the chaff bundles, which are comprised in the device, are displaced towards the ejection opening. This problem has been eliminated in one embodiment of the spreading device according to the invention by distributing the weight thereof in such a manner that its point of gravity lies in the front part of the device and remains substantially stationary when the chaff is ejected.

Such a weight distribution can be obtained by providing in a front end space of said device a ballast preferably in the form of a container for cooling gas. This cooling gas is used for cooling IR-elements present in a hunting missile carried by the airplane.

Due to the ballast which has a larger weight than the chaff, the point of gravity of the whole device will not change much when the chaff is ejected.

In order to keep the point of gravity practically stationary in a further embodiment the magazine comprises at least one pair of cells in which chaff is displaceable in opposite directions.

By distributing the weight in the manner described above it is ensured that the torsional forces on the wings are small and that the device after release from the wing will proceed its way in the same position i.e. it will not turn over and thereby damage the airplane.

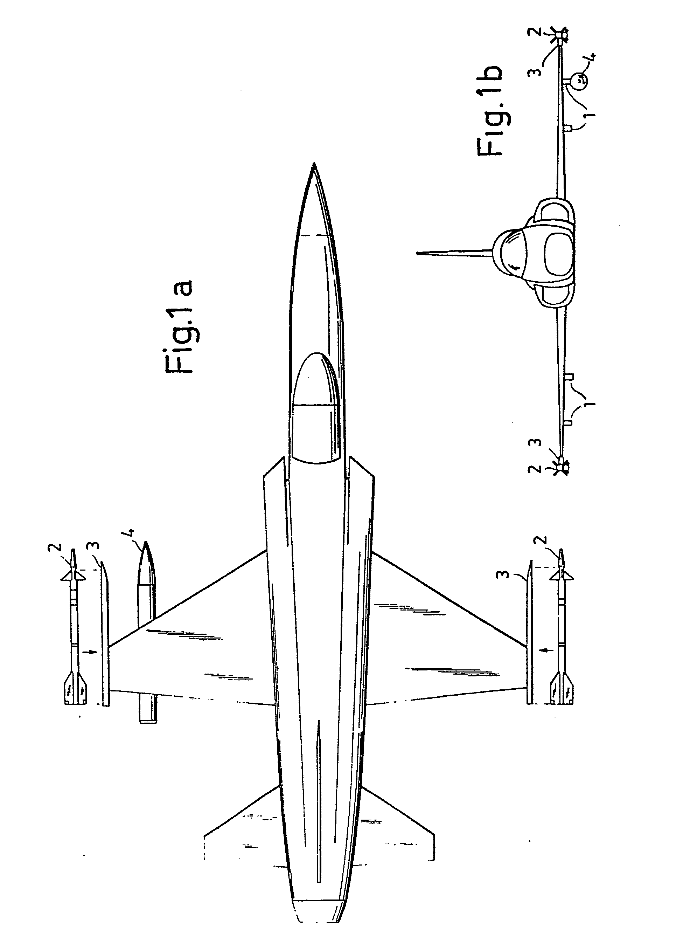

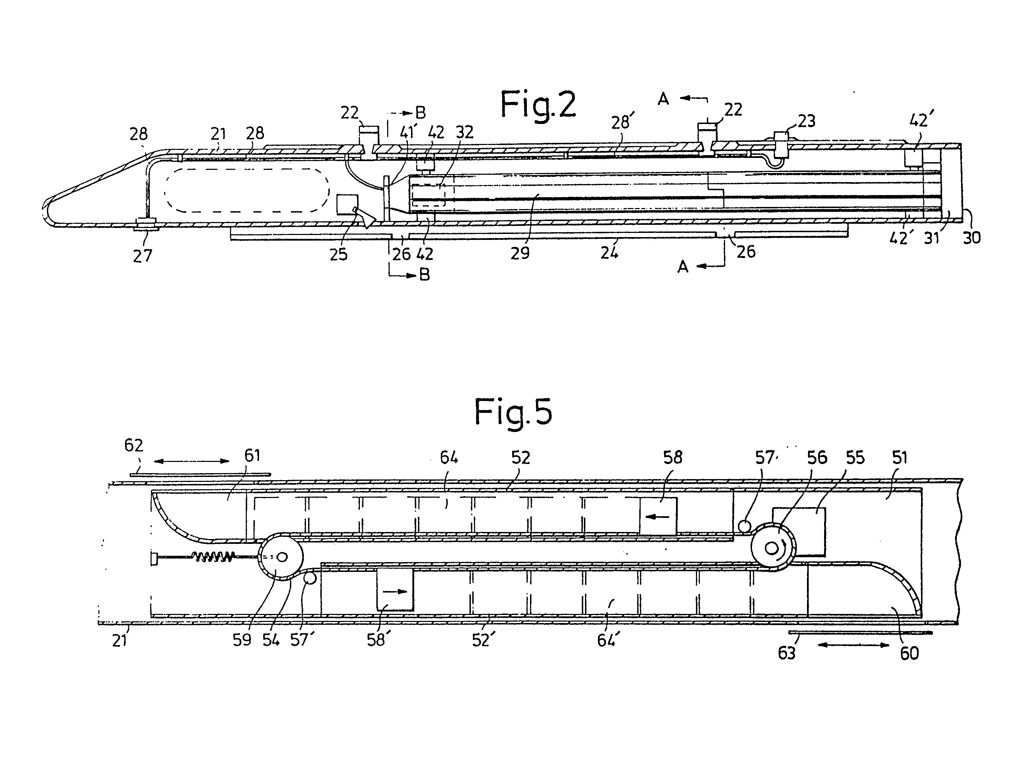

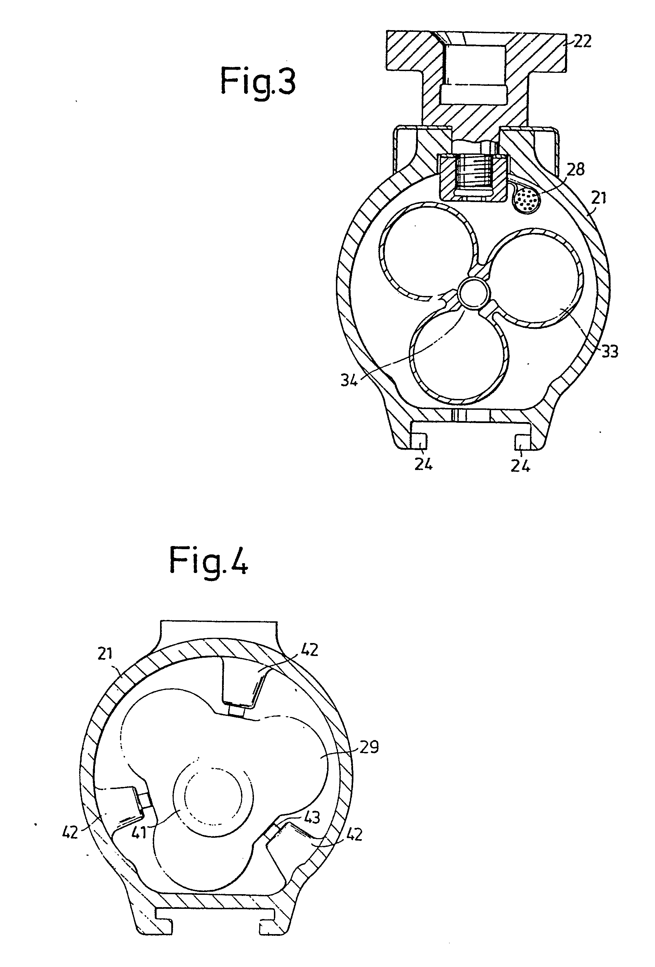

In the following the invention will be described in closer detail in connection with one preferred embodiment and with reference to the drawings, in which: *fig. 1a and 1b* show an airplane in top and frontal view on which chaff spreading devices are suspended; *fig. 2* shows one embodiment of the device according to the invention; *fig. 3* shows a section A—A of the device disclosed in fig. 2; *fig. 4* shows section B—B of the device disclosed in fig. 2; *fig. 5* shows one further embodiment of the spreading device according to the invention.

The airplane in fig. 1 is provided with a number of beam positions 1 under the wings and the airplane body. At the very end of the wing tips two positions for hunting missiles 2 are provided. The hunting missiles are suspended to the wing tips via spreading devices 3 according to the invention providing for mechanical and electrical adaption between missile and airplane. On one of the left beam positions a capsular chaff spreading device 4 of prior art type is shown. As evident from the drawing the dimension of the capsular unit 4 is quite different from that of the devices 3, and this also gives a clear illustration of the asymmetry problems with respect to weight and air resistance which are encountered when a prior art capsular unit is used. Each of the spreading devices 3 may comprise a smaller part of the chaff load of the prior art's capsular unit. The smaller amount of chaff will be compensated for by the fact that the spreading devices by the arrangement thereof at the wingtips will provide for an optimal use of the chaff. When a larger chaff capacity is required another two or more spreading devices may be used at other beam positions. If so these spreading devices may also be provided with attachment means and contact members in order to obtain mechanical and eletrical adaption to other units carried by the airplane. The construction of the spreading device 3 will be described in closer detail in the following.

In fig. 2 is shown a sectional view of one embodiment of the spreading device 3 of fig. 1 and intended for adaption between an airplane and a homing missile, for which the spreading device will consequently function as a firing launch. The device comprises an aerodynamically shaped outer cover 21. On the top side of the cover two attachment means 22 are provided, said means being normally shaped as T (see figure 3) and intended to be inserted into corresponding recesses of attachment means on the airplane. In connection with the rear-end attachment means 22 is provided a coupling member 23 intended to be coupled to a corresponding member which via a cabling for example may be in connection with equipment within the airplane. Via conductors 28' some of said coupling members will provide for power supply to the spreading device and may comprise electrical or pneumatical conductors dependent on the type of driving device which is used for driving forward the chaff bundles. Others of said coupling members are intended for transmission of control signals from equipment in the airplane and may comprise electrical or optical members.

On the other side of the cover is provided an attachment means 24, which in this embodiment is shaped as a beam or rail along which corresponding hanging members of the missile will slide at firing. The detailed shape of said rail is shown in figure 3. In connection with the rail 24 is provided a locking member 25 for locking temporarily the missile to said rail. Said member 25 being electrically operable. Along the rail two openings 26 are provided through which the normally T-shaped suspension members of the missile may be inserted. The missile being then pushed forward along the rail until the locking member 25 is catched. In connection with the front part of the rail 24 contact members 27 are provided for transmission of control signal to a suspended missile. Said contact members may for example consist of a cabling having a connector joint and being arranged behind a lid.

Between said contact members 27 and some of said coupling members 23 transfer means 28 accommodated within the cover are provided for the transmission of electrical, optical and/or pneumatical signals to the missile from equipment in the airplane.

Since the detailed shaping of said attachment means, coupling members and contact members has no importance for an understanding of the invention a detail description thereof has been omitted. One preferred embodiment of the spreading device according to the invention is to adapt the external shape of the cover, said coupling and contact members as well as the attachment means and the mutual positions thereof to corresponding data of said missile launch. Thereby a chaff spreading device with a large range of application is obtained.

Within the cover a magazine 29 is accommodated comprising one or more longitudinal cells (see figures 3,4) in which chaff bundles may be displaced towards a spreading device ejection opening 30 which may be closed by means of closing member 31 which may be controlled from the airplane. In the front end of the magazine a driving device 32 is provided, which may comprise an electric motor, for driving forward a bundle displacement member. The front end of the cover has an available space which in one embodiment of the spreading device, when intended for adaption between an airplane and a hunting missile of an IR homing type having an IR element which must be cooled, may accommodate a container with a cooling gas which is indicated by means of dotted lines.

In fig. 3 is shown a section A—A of the device of fig. 2. This section shows the detailed shaping of the attachment means 22 and 24. The attachment means 22 are T-shaped and that the attachment means or rail 24 has an internal T-shape. The transfer means 28 are provided along the upper wall of the cover. The magazine 29 comprises three longitudinal and cylinder-shaped cells 33 in which chaff bundles of an external diameter which substantially corresponds to the internal diameter of said cells may be displaced. This displacement is obtained by a bundle displacement member having three wings (not shown) which are each inserted into a belonging cell via a longitudinal slot 34 from a common part of said member, which is advanced by means of a centrally arranged screw. Said screw is rotated by the driving device or motor 32. For a closer description of the magazine and the displacement device is referred to the above mentioned SE patent application 7606167-0.

The construction of the magazine and the belonging displacement device which has been shown and described above is only one possible technical solution. For alternative solutions is referred to the SE patent applications Nos. 7812889-9 and 7901890-9.

In fig. 4 is shown a sectional view B—B of the device in fig. 2. This section is done at the front part of the magazine 29 which is provided with a guiding device comprising in this embodiment a ring-shaped electrical contact member 41. When the magazine 29 is inserted into the cover 21 said contact member 41 is brought into contact with a corresponding stationary contact member 41' (see fig. 2) in the cover, which in turn is connected to said coupling member 23, allowing thereby the driving motor to be supplied with driving current as desirable. The shape of at least the front part of the magazine has been modified by filling out the external spaces between the walls of said cells 33. Thereby surfaces, sloping towards the contact member 41, are obtained which in cooperation with guiding elements 42 on the inside of the cover provided for guiding of the front end of the magazine into a desirable position in cover 21. Said guiding elements 42 preferably comprise resilient contact elements 43, which are pressed against the magazine. The rear part of the magazine may be kept in position by corresponding elements 42' (see fig. 2) arranged in connection to the ejection opening.

Fig. 5 shows one further embodiment of a magazine 51 for use in the spreading device according to the invention. This magazine 51 comprises two longitudinal cells 52, 52' in which chaff bundles may be displaced by means of plunger devices 58, 58'. Said plunger devices are advanced in opposite directions by means of a wire 54 and a driving motor 55 which is arranged so as to drive a driving wheel 56 from which said wire 54 runs via a tension roller 57 to the plunger device 58 and from this point along the inside of cell 52 to a spring loaded conducting roller 59 and via a second tension roller 57' to the plunger device 58' and from this point along the inside of cell 52' back to the driving wheel 56. At the output end of the cells, means (not shown) are provided for disintegration of the chaff from the bundles, which normally means that a paper cover enclosing the bundels is cut or ripped. Said means may for example comprise a knife member inserted into the cell and being rotatable by means of said wire. A knife member of this type has been disclosed in the above mentioned SE patent application 7901890-0. The output end of each cell emanates in a belonging ejection opening 60 and 61, respectively, communicating with corresponding openings in the cover 51. These openings being covered by closing devices 62, 63.

When the driving motor 55 is activated the strings of chaff bundles 64, 64' indicated in cells 52, 52', will be displaced in opposite directions by the plunger devices 58, 58'. Thereby is obtained that the point of gravity of the spreading device will be kept substantially unchanged, which is advantageous with respect to a limited torsional stiffness of airplane wings when using magazines with an increased chaff load and weight. When the spreading devices are mounted at the ends of the airplane wings as shown in fig. 1 it may sometimes be very important that a displacement of the point of gravity and thereby an increased torsional load of the wings should not occur.

The weight distribution of the device is such that the point of gravity lies in the front part of the device and remains there when the chaff is discharged. This is important as explained above for the torsional load in the wings. This weight distribution is also very important for the situation in which the device has to be released from the airplane. In that case it is important that the released device proceeds its way without tumbling over. When the device tumbles over the possibility exists that it damages the airplane. By distributing the weight such that the device is noseheavy and remains noseheavy after discharging the chaff the device will remain in a stable position after release from the airplane.

**Claims**

1. A device for spreading of radar chaff from airplanes comprising a magazine (29) for said chaff, being preferably arranged as chaff bundles, which may be displaced towards an ejection opening by means of a controllable

·displacement member, in which said chaff is ejected into the surrounding air stream and spreading is obtained by using air turbulence, the device comprising an aerodynamically shaped cover (21) which may be applied on an airplane wing and accommodating said magazine and displacement members connected to a driving device (55,32) for the chaff bundles, said coupling members (23) being connectable to equipment in the airplane to receive power and control signals for each driving device (55,32), characterized in that said cover (21) is, in combination, provided on a first side, with first attachment means (22) and coupling members (23), said attachment means and coupling members being adapted for cooperation with corresponding means and members at a position (1) on the airplane, and, on a second side which is opposite to the first side, with further attachment means (24,25) and contact members (27) adapted for cooperation with corresponding means provided on a unit (2) which may be additionally carried by the airplane and in that transfer means (28) are provided between said coupling members (23) and the driving device (55/32) and said contact members (27), said cover being thereby useful for e.g. a mechanical and electrical adaptation between the airplane and equipment or weapons carried by the same.

2. A device as claimed in claim 1, characterized in that said further attachment means comprises on the external side of the cover (21) a longitudinal beam or rail (24) and in connection with said rail a locking mechanism (25) which may be operated from equipment which is provided in the airplane and in that contact members (27) comprises an electrical conductor joint for connection to said missile, the device being thereby useful as a so called rail launch for firing of a missile (2, fig. 1).

3. A device as claimed in claim 1 or 2, characterized in that the device has a weight distribution such that its point of gravity lies in the front part of the device and remains substantially stationary when the chaff is ejected.

4. A device as claimed in claim 3, characterized in that the device comprises in a front end space of said cover a ballast preferably in the form of a container for cooling gas.

5. A device as claimed in claim 3 or 4, characterized in that said magazine (51) comprises at least one pair of cells (52,52') in which cells chaff is displaceable in opposite directions by means of separate displacement members (58,58') in each of the cells which may be activated simultaneously.

6. A device as claimed in any one of the preceding claims, characterized in that the magazine (29) is shaped as a selfsupporting unit which may be inserted longitudinally into the cover (21), that guiding elements (41,42) for guiding the magazine into a desirable position in the cover are arranged on the magazine and on the inside of the cover.

7. A device as claimed in claim 6, characterized in that the magazine carries said displacement member, whereas a driving device (32) for said displacement member has been built into the end of the magazine which is remote from the ejection opening (30), the magazine being provided with an electrical contact member (41) which has contact with a corresponding contact member (41') in the cover in the inserted position of the magazine.

8. A use of a device according to any one of the preceding claims for spreading of radar chaff from an airplane and comprising a magazine (29) for said chaff, being preferably arranged as chaff bundles which may be displaced towards an ejection opening by means of a controllable displacement member, said chaff being ejected in the surrounding air stream and spreading obtained by using air turbulence, characterized in that two spreading devices (3), having each preferably an external shape of a missile launch, are used on an airplane said spreading devices being mounted at the wing tips of the airplane, the airplane being thereby loaded symmetrically with respect to weight and air resistance and optimal spreading and use of the amount chaff being obtained as a consequence of the maximum possible mutual distance between the spreading devices and the strongly turbulent air streams appearing at the wing tips.

**Revendications**

1. Dispositif permettant de disperser des leurres anti-radar à partir d'avions présentant un magasin (29) pour lesdits leurres, qui sont de préférence montés sous forme de faisceaux, qui peuvent être déplacés vers une ouverture d'éjection à l'aide d'un organe de déplacement manoeuvrable, lesdits leurres étant éjectés dans le courant d'air environnant et une dispersion étant obtenue par utilisation de tourbillons d'air, dispositif qui comporte un couvercle de forme aérodynamique (21), qui peut être appliqué sur une aile de l'avion, alors que dans ce couvercle sont logés ledit magasin et les organes de déplacement, qui sont reliés à un dispositif d'entraînement (55/32) pour les faisceaux de leurres, caractérisé en ce que ledit couvercle (21) est appliqué, en combinaison avec des premiers moyens de fixation (22) et des moyens d'accouplement (23) d'un premier côté, lesdits moyens de fixation et d'accouplement pouvant coopérer avec des moyens correspondants et des organes dans une position (1) sur l'avion, alors que du deuxième côté, qui est opposé au premier côté, sont prévus d'autres moyens de fixation (24, 25) et des organes de contact (27) qui peuvent coopérer avec des moyens correspondants qui sont appliqués sur une unité (2), qui peut être transportée, en outre par l'avion et que les moyens de transmission (28) sont appliqués entre lesdits organes d'accouplement et le dispositif d'entraînement (55, 32) et lesdits organes de contact (27), lesdits couvercles convenant à une adaptation électrique et mécanique entre l'avion et l'appareillage ou les armes transportés par l'avion.

2. Dispositif selon la revendication 1, caractérisé en ce que ledit autre moyen de fixation comporte, du côté extérieur du couvercle (21), une poutre longitudinale ou rail (24) qui contient, en combinaison avec ledit rail, un mécanisme de verrouillage (25), qui peut être manoeuvré à partir d'appareillage prévu dans l'avion, et que lesdits organes de contact (27) sont constitués par un joint de guidage électrique pour l'accouplement audit missile, le dispositif pouvant être utilisé comme un organe de lancement dit à rail pour le tir d'un missile (2, figure 1).

3. Dispositif selon la revendication 1 ou 2, caractérisé en ce que le dispositif présente une répartition de poids telle que son centre de gravité se situe dans la partie avant du dispositif et reste partiquement constant lorsque les leurres Sont éjectés.

4. Dispositif selon la revendication 3, caractérisé en ce que dans une partie terminale avant dudit couvercle, le dispositif comporte un ballast, de préférence sous forme d'un récipient pour du gaz de refroidissement.

5. Dispositif selon la revendication 3 ou 4, caractérisé en ce que ledit magasin 51 comporte au moins une paire de cellules 52, 52', cellules dans lesquelles des leurres peuvent être déplacés dans une direction opposée à l'aide d'organes de déplacement séparés (58, 58') dans chacune des cellules qui peuvent être simultanément actionnées.

6. Dispositif selon l'une des revendications précédentes, caractérisé en ce que le magasin (29) est sous forme d'une unité autoportante, qui peut être insérée longitudinalement dans le couvercle (21), que des éléments de guidage (41, 42) pour le guidage du magasin dans une position désirable dans le couvercle sont disposés sur le magasin et sur la face intérieure du couvercle.

7. Dispositif selon la revendication 6, caractérisé en ce que le magasin supporte ledit organe de déplacement, alors qu'un dispositif d'entraînement (32) pour ledit organe de déplacement est incorporé dans l'extrémité du magasin opposée de l'ouverture d'éjection (30), le magasin étant muni d'un organe de contact électrique (41), qui est en contact avec un organe de contact correspondant (41') dans le couvercle dans la position du magasin dans laquelle celui-ci est inséré dans le couvercle.

8. Application du dispositif selon l'une quelconque des revendications précédentes pour la dispersion de leurres anti-radar à partir d'un avion présentant un magasin (29) pour lesdits leurres, qui sont de préférence montés sous forme de faisceaux de leurres pouvant être déplacés vers une ouverture d'éjection à l'aide d'un organe de deplacement manoeuvrable, lesdits leurres étant éjectés dans le courant d'air environnant et la dispersion s'obtient par utilisation des tourbillons d'air, caractérisé en ce que deux dispositifs de dispersion (3) qui présentant chacun de préférence une forme externe d'un organe de lancement de missiles, sont utilisés sur un avion, lesdits dispositifs de dispersion étant montés sur les extrémités d'ailes de l'avion de sorte que l'avion est soumis á une charge symétrique pour ce qui concerne le poids et la résistance à l'air, et une dispersion optimale et l'utilisation d'une quantité de leurres s'obtiennent comme résultant de la distance relative possible au maximum entre le dispositif de dispersion et les courants d'air fortement tourbillonnants se produisant aux extrémités des ailes.

## Patentansprüche

1. Vorrichtung zum Verteilen von Radardüppeln aus Flugzeugen mit einer Halterung (29) für die genannten Düppel, die vorzugsweise als Bündel angebracht sind, die zu einer Auswurföffnung hin bewegt werden können und zwar mit Hilfe eines steuerbaren Bewegungselementes, wobei die genannten Düppel in den umgebenden Luftstrom geworfen werden und eine Verteilung erhalten wird durch Anwendung von Luftwirbelungen, welche Vorrichtung eine aerodynamisch gebildete Umhüllung (21) aufweist, die auf einem Flugzeugflügel angeordnet sein kann, während in dieser Umüllung die genannte Halterung und die Bewegungselemente untergebracht sind, die mit einer Abtriebsvorrichtung (55, 32) für die Düppel verbunden sind, wobei Kupplungselemente (23) mit Apparatur in dem Flugzeug zum Erhalten von Energie und Steuersignalen für jede Antriebsvorrichtung (55/32) verbunden werden können, dadurch gekennzeichnet, dass die genannte Umhüllung (21) zusammen mit ersten Befestigungsmitteln (22) und Kupplungsmitteln (23) auf einer ersten Seite vorgesehen ist, wobei die genannten Befestigungs- und Kupplungsmittel mit entsprechenden Mitteln und Elementen zusammenarbeiten können in einer Lage (1) auf dem Flugzeug, während sich an einer zweiten der ersten Seite gegenüberliegenden Seite weitere Befestigungsmittel (24, 25) und Kontaktelemente (27) befinden, die mit entsprechenden Mitteln zusammenarbeiten können, die auf einer Einheit (2) angeordnet sind, die ebenfalls von dem Flugzeug getragen wird und dass Uebertragungsmittel (28) zwischen den genannten Kupplungselementen (23) und der Antriebsvorrichtung (55/32) sowie den genannten Kontaktelementen (27) vorgesehen sind, wobei die genannte Umhüllung sich für beispielsweise eine mechanische und elektrische Anpassung zwischen dem Flugzeug und der von dem Flugzeug getragenen Apparatur oder Waffen eignet.

2. Vorrichtung nach Anspruch 1, dadurch gekennzeichnet, dass die genannten weiteren Befestigungsmittel aur der Aussenseite der Umhüllung (21) einen Längsbalken bzw. eine Längsschiene (24) und zusammen mit dieser Schiene einen Verriegelungsmechanismus (25) enthalten, welcher Mechanismus von der Apparatur betätigt werden kann, die in dem Flugzeug angeordnet ist und dass die genännten Kontaktelemente (27) aus einer elektrischen Leiterverbindung zum Koppeln mit der genannten Rakete bestehen, wobei dadurch Vorrichtung als sogenanntes Schienenlanzierelement zum Abfeueren einer Rakete (2), Figur 1, geeignet ist.

3. Vorrichtung nach Anspruch 1 oder 2, dadurch gekennzeichnet, dass die Vorrichtung eine derartige Gewichtsverteilung hat, dass der Schwerpunkt derselben in dem vorderen Teil der Vorrichtung liegt und nahezu nicht verschiebt, wenn die Düppel ausgeworfen werden.

4. Vorrichtung nach Anspruch 3, dadurch gekennzeichnet, dass die Vorrichtung in einem vorderen Endraum des genannten Deckels eine Ballast aufweist, vorzugsweise in Form eines Behälters für Kühlgas.

5. Vorrichtung nach Anspruch 3 oder 4, dadurch gekennzeichnet, dass die genannte Halterung (51) mindestens ein Paar Zellen 52, 52') enthält, worin die Düppel in entgegengesetzten Richtungen mit Hilfe einzelner Verschiebungselemente (58, 58') in jeder der Zellen verschoben werden können, welche Elemente gleichzeitig wirksam gemacht werden können.

6. Vorrichtung nach einem oder mehreren der vorstehenden Ansprüche, dadurch gekennzeichnet, dass die Halterung die Form einer selbsttragenden Einheit hat, die in der Längsrichtung in die Umhüllung (21) gesteckt werden kann, dass Führungselemente (41, 42) zum in eine gewünschte Lage in der Umhüllung Bringen der Halterung auf dieser Halterung und auf der Innenseite des Deckels angeordnet sind.

7. Vorrichtung nach Anspruch 6, dadurch gekennzeichnet, dass die Halterung das genannte Verschiebungselement trägt, während eine Antriebsvorrichtung (32) für das genannte Verschiebungselement in dem Ende der Halterung eingebaut ist, welches Ende von der Auswurföffnung (30) abgewandt ist, wobei Halterung mit einem elektrischen Kontaktelement (41) versehen ist, das mit einem entsprechenden Kontaktelement (41') in der Umhüllung in der Lage der Halterung, worin diese in den Deckel gesteckt ist, in Kontakt steht.

8. Verwendung einer Vorrichtung nach einem oder mehreren der vorstehenden Ansprüche zum Verteilen von Radardüppeln aus einem Flugzeug mit einer Halterung (29) für die genannten Düppel, die vorzugsweise in Form von Düppelbündeln angebracht sind, die zu einer Auswurföffnung hin bewegt werden können und zwar mit Hilfe eines steuerbaren Verschiebungselementes, wobei die genannten Düppel in dem umgebenden Luftstrom geworfen werden und die Verteilung durch Ausnutzung von Luftwirbelungen erhalten wird, dadurch gekennziechnet, dass zwei Verteilungsvorrichtungen (3), die je vorzugsweise eine äussere Form eines Raketenlanzierelementes haben, auf einem Flugzeug verwendet werden, wobei die genannten Verteilungsvorrichtungen an den Flügelspitzen des Flugzeuges angeordnet sind, wodurch das Flugzeug in bezug auf Gewicht und Luftwiderstand symmetrisch belastet ist und eine optimale Verteilung und Verwendung der Menge Radardüppel erhalten wird als Resultat des maximal möglichen Abstandes voneinander zwischen den Verteilungsvorrichtungen und den stark wirbelnden Luftströmen, die an den Flügelspitzen auftreten.

Fig.1 a

Fig.1b

0 036 239

Fig.2

Fig.5

# Fig.3

# Fig.4